**Europäisches Patentamt**

(19) **European Patent Office**

**Office européen des brevets**

(11) Veröffentlichungsnummer: **0 140 046**
**B1**

(12) **EUROPÄISCHE PATENTSCHRIFT**

(45) Veröffentlichungstag der Patentschrift:
**01.04.87**

(51) Int. Cl.⁴: **B 60 K 17/10,** B 60 K 17/28,
B 65 F 3/00, F 16 H 47/02

(21) Anmeldenummer: **84110539.8**

(22) Anmeldetag: **05.09.84**

(54) Hydrostatisch-mechanische Getriebeanordnung.

(30) Priorität: **15.09.83 PC /LU83/002 42**

(43) Veröffentlichungstag der Anmeldung:
**08.05.85 Patentblatt 85/19**

(45) Bekanntmachung des Hinweises auf die Patenterteilung:
**01.04.87 Patentblatt 87/14**

(84) Benannte Vertragsstaaten:
**AT DE FR GB IT**

(56) Entgegenhaltungen:
**EP - A - 0 013 425**
**EP - A - 0 063 177**
**DE - A - 2 910 623**
**DE - A - 3 224 968**
**DE - B - 1 528 550**
**DE - B - 1 650 734**
**GB - A - 1 278 223**
**GB - A - 1 372 803**
**GB - A - 2 019 615**
**GB - A - 2 090 383**

(73) Patentinhaber: **ZAHNRADFABRIK FRIEDRICHSHAFEN AKTIENGESELLSCHAFT, Löwentaler Strasse 100 Postfach 2520,
D-7990 Friedrichshafen 1 (DE)**

(72) Erfinder: **Mann, Egon, Alamannenweg 11,
D-7990 Friedrichshafen (DE)**
Erfinder: **Gazyakan, Ünal, Königsberger Strasse 13,
D-7990 Friedrichshafen (DE)**

(74) Vertreter: **Raue, Reimund, Zahnradfabrik Friedrichshafen AG Löwentaler Strasse 100 Postfach 2520,
D-7990 Friedrichshafen 1 (DE)**

ACTORUM AG

## Beschreibung

Die Erfindung betrifft eine hydrostatisch-mechanische Getriebeanordnung, insbesondere für Müllsammelfahrzeuge nach dem Oberbegriff von Anspruch 1.

Bei Müllfahrzeugen müssen der Fahrantrieb und die Arbeitshydraulik folgende Bedingungen erfüllen:

— Kriechgangfahrten im Arbeitseinsatz, insbesondere «STOP-AND-GO-Betrieb», wozu ein stufenloser hydrostatischer Fahrantrieb eingeschaltet ist;

— zur Beladung wird der hydrostatische Fahrantrieb ausgeschaltet und das Fahrzeug angehalten. Gleichzeitig wird die Arbeitshydraulik eingeschaltet, die den Müll beispielsweise aus einer Beladewanne durch das Zusammenwirken einer durch Arbeitszylinder bewegbaren Pressplatte und Schubwand ausräumt und verdichtet (sogenannter Pressbetrieb oder auch Müllbetrieb);

— Normalfahrt zur Überwindung grösserer Entfernungen mit dem üblichen Mehrgangschaltgetriebe.

Eine die Merkmale des Oberbegriffs von Anspruch 1 enthaltende Getriebeanordnung ist z.B. aus der GB-A-1 278 223 bekannt. Eine Antriebsmaschine ist hierbei über ein Zwischengetriebe mit einem auf eine Antriebsachse abtreibenden Mehrgangschaltgetriebe verbunden. Eine motorabhängige Verstellpumpe treibt im geschlossenen Ölkreis einen Hydromotor an, welcher über das zuschaltbare Zwischengetriebe in das Gangschaltgetriebe eintreiben kann. Auf diese Weise ist neben dem Normalantrieb nur über das Gangschaltgetriebe ein hydrostatischer Kriechgangantrieb unter Ausnutzung der Gangstufen des Schaltgetriebes möglich. Das Gangschaltgetriebe weist ausserdem noch eine Zapfwelle zum Antreiben einer Konstantpumpe auf, die an einen Hydromotor für die Arbeitshydraulik angeschlossen ist.

Die bekannte Getriebeanordnung arbeitet daher mit einem wegabhängigen Zapfwellenantrieb und mit getrennten Ölkreisen für den Fahrantrieb und die Arbeitshydraulik. Die eingangs dargelegten Forderungen speziell für Müllfahrzeuge, nämlich die Betätigung von Pressplatte und Schubwand im Fahrzeugstillstand, lässt sich mit diesem Aufbau nicht verwirklichen.

Der Erfindung liegt die Aufgabe zugrunde eine auf die besonderen Einsatzzwecke von Müllsammelfahrzeugen abgestimmte Antriebsanordnung für den Fahr- und Müllbetrieb (Pressbetrieb) zu finden, die mit geringem Bau- und Bedienungsaufwand auskommt.

Diese Aufgabe ist durch die Merkmale des Anspruches 1 gelöst. Nach der Erfindung ist die bei Kriechgangfahrt auf den Hydromotor des Fahrantriebs geschaltete Verstellpumpe im Fahrzeugstillstand durch ein Umschaltventil auf die Arbeitshydraulik des Presssystems geschaltet. Der Antrieb des Hydromotors bei Kriechgangfahrt erfolgt hierbei im geschlossenen Ölkreis, während die Arbeitshydraulik im offenen Kreis mit Drucköl versorgt wird. Durch die Erfindung ist es möglich die Versorgung des Fahrantriebs und der Arbeitshydraulik mit nur einer Hydropumpe zu verwirklichen. In der Stellung «Müll- oder Pressbetrieb» wird die Verstellpumpe vorteilhaft auf eine bestimmte Fördermenge eingestellt. Gleichzeitig wird die Antriebsmaschine z.B. über den Regler der Einspritzpumpe auf eine konstante Drehzahl eingestellt. Der die Verstellpumpe antreibende motorabhängige Nebenabtrieb unterliegt somit keinen Drehzahlschwankungen.

Ein weiterer Vorteil der Erfindung besteht darin, dass der Hydromotor für den Kriechgangantrieb mit einer ständig an die Getriebeausgangswelle angeschlossenen Zwischengetriebe-Ausgangswelle verbunden ist, so dass der Kriechgangantrieb nur in der Neutralstellung des Schaltgetriebes einschaltbar ist.

Weitere Einzelheiten und Vorteile von zwei Ausführungsbeispielen der Erfindung sind nachfolgend anhand der Zeichnung näher erläutert:

Es zeigen:

Fig. 1 den schematischen Aufbau einer Getriebeanordnung,

Fig. 2 das Hydraulikschema der Getriebeanordnung nach Fig. 1,

Fig. 3 ein weiteres Ausführungsbeispiel eines stark vereinfacht dargestellten Getriebeaufbaus.

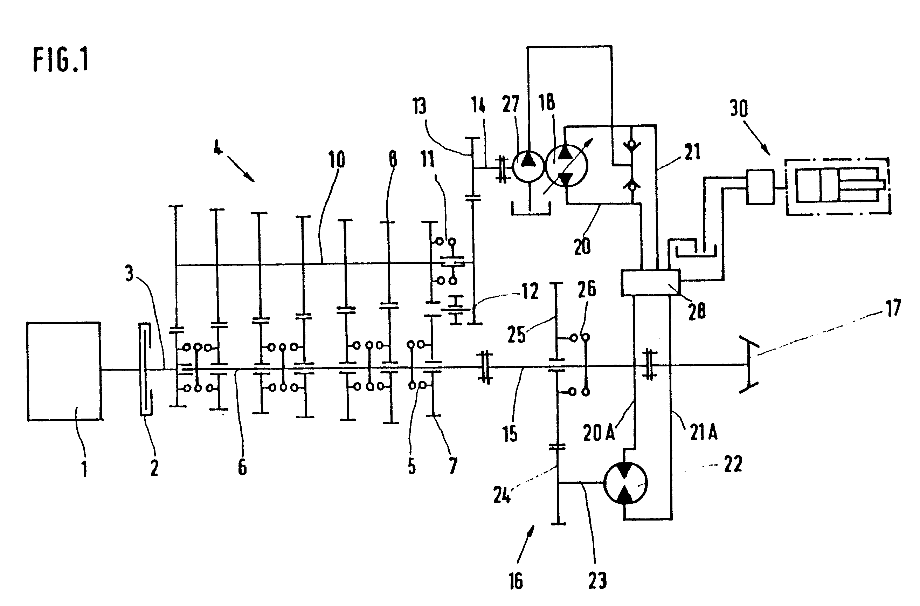

Nach Fig. 1 treibt eine Antriebsmaschine 1 über eine Hauptkupplung 2 und eine Getriebeeingangswelle 3 z.B. ein 6gängiges Schaltgetriebe 4 in der üblichen Vorgelegebauart an. Sämtliche Gangschaltkupplungen z.B. 5 sind auf einer Getriebeausgangswelle 6 drehfest aber verschieblich angeordnet und können die Losräder z.B. 7 mit der Ausgangswelle 6 kuppeln. Die Losräder stehen mit Festrädern z.B. 8 auf einer Vorgelegewelle 10 in Eingriff.

Die Wirkungsweise eines derartigen Schaltgetriebes ist allgemein bekannt. Die Vorgelegewelle 10 kann über ein durch eine Kupplung 11 einschaltbares Zahnräderpaar 12, 13 mit einer Nebenabtriebswelle 14 verbunden werden.

Die Getriebeausgangswelle 6 ist an eine Ausgangswelle 15 eines Zwischengetriebes 16 angeschlossen. Die Zwischengetriebe-Ausgangswelle 15 führt zu einem Achsantrieb 17. Der Kriechgangantrieb erfolgt über eine durch die Nebenabtriebswelle 14 antreibbare Verstellpumpe 18, die ihrerseits über Leitungen 20, 21 bzw. 20A, 21A einen Hydromotor 22 antreibt. Der Hydromotor 22 ist mit einer Zwischengetriebe-Eingangswelle 23 verbunden auf der ein Zahnrad 24 befestigt ist. Dieses Zahnrad 24 steht mit einem Losrad 25 in Eingriff. Das Losrad 25 ist durch eine Kupplung 26 mit der Zwischengetriebe-Ausgangswelle 15 kuppelbar.

Die Verstellpumpe 18 arbeitet auf den Hydromotor 22 für den Kriechgang im geschlossenen Kreis. Es ist deshalb eine gleichfalls durch die Nebenantriebswelle 14 angetriebene Füllpumpe 27 vorgesehen, die in bekannter Weise dafür sorgt, dass Lecköverluste in den Leitungen 20, 20A und 21, 21A ausgeglichen werden, wenn das Fahrzeug im hydrostatischen Kriechgangantrieb fährt. Zwischen die Leitungen 20, 20A bzw. 21, 21A ist ein Umschaltventil 28 eingesetzt, welches die Verstellpumpe 18 auf eine Arbeitshydraulik 30 umschalten kann.

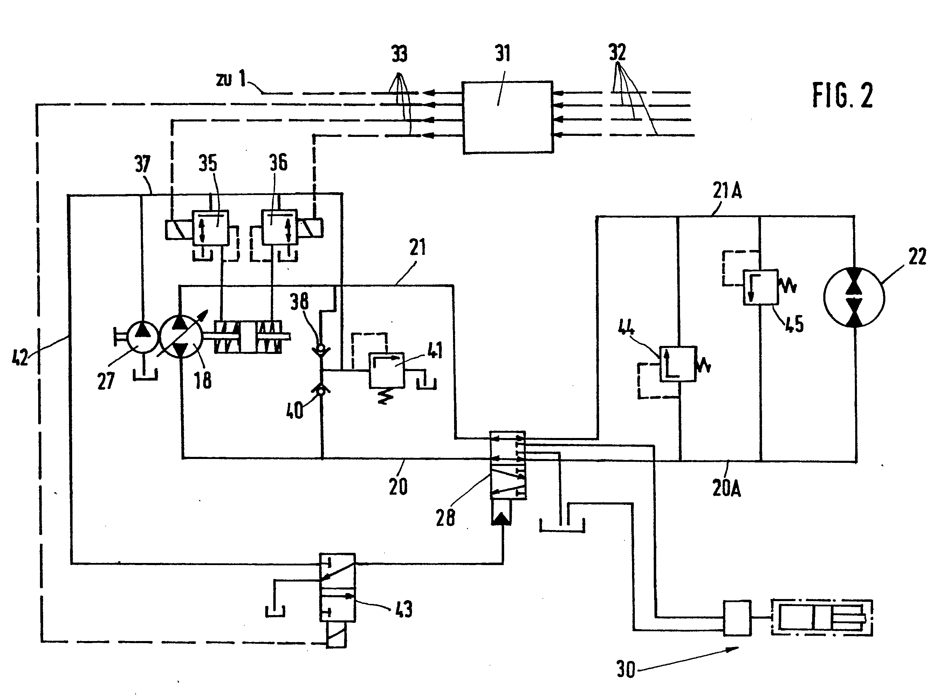

Aus dem Hydraulikschema nach Fig. 2 ist ersichtlich, dass verschiedene Betriebszustände durch elektrische Steuersignale auslösbar sind, die von einem elektronischen Steuergerät 31 kontrolliert werden. So können über elektrische Leitungen 32 in das Steuergerät Eingangssignale z.B. der jeweiligen Gaspedalstellung und Antriebsmaschinendrehzahl, sowie der Stellung eines Fahrtrichtungsschalters und eines Arbeitshydraulik-Kriechgangschalters eingegeben werden. Über Leitungen 33 werden die erzeugten Ausgangssignale der Antriebsmaschine 1 (Drehzahl n = konstant bei Betätigung der Arbeitshydraulik), einem Vorsteuerventil 43 und zwei Schaltventilen 35, 36 für Vorwärts- und Rückwärtsfahrt zugeführt. Über die Schaltventile 35 und 36 ist die Förderrichtung der Verstellpumpe 18 zum Wechseln der Antriebsrichtung umsteuerbar. Die Füllpumpe 27 ist durch eine Leitung 37 und Rückschlagventile 38, 40 mit den Leitungen 20 und 21 der Verstellpumpe 18 verbunden, d.h., die Füllpumpe 27 hält den aus Verstellpumpe 18, Hydromotor 22 und den Leitungen 21, 21A und 20, 20A bestehenden geschlossenen Ölkreis in der in Fig. 2 gezeichneten Stellung des Umschaltventils 28, gefüllt. Ein Überdruckventil 41 schützt die Füllpumpe 27 vor einer Überlastung. Die Füllpumpe 27 versorgt ausser den Schaltventilen 35, 36 für den Fahrtrichtungswechsel, über eine weitere Leitung 42 noch das Vorsteuerventil 43. Die zum Hydromotor 22 führenden Leitungen 21A, 20A enthalten Sicherheitsventile 44, 45.

*Die Wirkungsweise*

Der Fahrer bedient zum Schalten der Getriebeanordnung neben dem Getriebeschalthebel noch einen Vorwählhebel mit den Stellungen «Normalfahrt» oder «Zusatzantrieb» und einen weiteren Schalthebel mit den Stellungen «Kriechgangfahrt» oder «Müllbetrieb».

Normalfahrt:

Bei normaler Fahrt z.B. zu einer Mülldeponie steht der Vorwählhebel in der Stellung «Normalfahrt», wobei das Schaltgetriebe 4 in gewohnter Weise im Einsatz ist. Dabei ist die Nebenabtriebswelle 14 durch die Kupplung 11 ausgeschaltet (Fig. 1). Ebenso ist die Kupplung 26 des Zwischengetriebes 17 ausgerückt. Die Getriebeausgangswelle 6 treibt somit über die Zwischengetriebe-Ausgangswelle 15 den Achsantrieb an.

Kriechgangfahrt:

Soll das Fahrzeug im Müllsammelbetrieb eingesetzt werden, so wird der Vorwählhebel auf «Zusatzantrieb» und der Schalthebel auf «Kriechgangfahrt» vestellt. Dabei ist durch eine geeignete Sperreinrichtung sichergestellt, dass die Schalthebelverstellung auf «Kriechgangfahrt» nur in der Neutralstellung des Schaltgetriebes möglich ist. In der Stellung «Kriechgangfahrt» ist die Kupplung 26 und die Kupplung 11 eingerückt. Die nunmehr arbeitende Verstellpumpe 18 treibt den Hydromotor 22 in der in Fig. 2 gezeichneten Stellung des Umschaltventils 28 im geschlossenen Kreis an. Der Kraftfluss erfolgt hierbei über die Zwischengetriebe-Eingangswelle 23, die Zahnräder 24 und 25, sowie die Zwischengetriebe-Ausgangswelle 15 auf den Achsantrieb 17. Durch eine drehzahl- und lastabhängige Steuerung der Verstellpumpe 18 lässt sich die Geschwindigkeit in einem Bereich von 0 bis 40 km/h regeln.

Müllbetrieb:

Hat das Fahrzeug zu entleerende Müllbehälter erreicht, so schaltet der Fahrer nur mit dem Schalthebel von «Kriechgangfahrt» auf «Müllbetrieb» (Pressbetrieb) um. Diese Umschaltung löst im Steuergerät 31 ein Ausgangssignal aus, durch welches das Vorsteuerventil 43 (Fig. 2) nach oben schaltet. Der in der Leitung 42 herrschende Druck der Füllpumpe 27 wirkt nunmehr auf das Umschaltventil 28, welches gleichfalls nach oben schaltet. Die Verstellpumpe 18 arbeitet somit im offenen Kreis auf die Arbeitshydraulik 30. In dieser Stellung wird die Antriebsmaschine 1 über die Einspritzpumpe automatisch auf konstante Drehzahl für die Nebenabtriebswelle 14 eingestellt. Ebenso geht die Verstellpumpe 18 automatisch auf ein bestimmtes Fördervolumen. Das Gaspedal ist in vorgenannter Stellung blockiert.

Im Müllsammelbetrieb betätigt der Fahrer also nur einen Schalthebel zwischen den Stellungen «Kriechgangfahrt» und «Müllbetrieb», der über das Steuergerät 31 auf das Umschaltventil 28 einwirkt und wechselweise entweder den Hydromotor 22 oder die Arbeitshydraulik einschaltet.

Das Bremspedal des Fahrzeugs kann in vorteilhafter Weise mit der Verstellpumpe 18 so gekoppelt sein, dass diese beim Bremsen zurückgeschwenkt und als Motor angetrieben wird. Dies ergibt eine zusätzliche hydrostatische Bremswirkung.

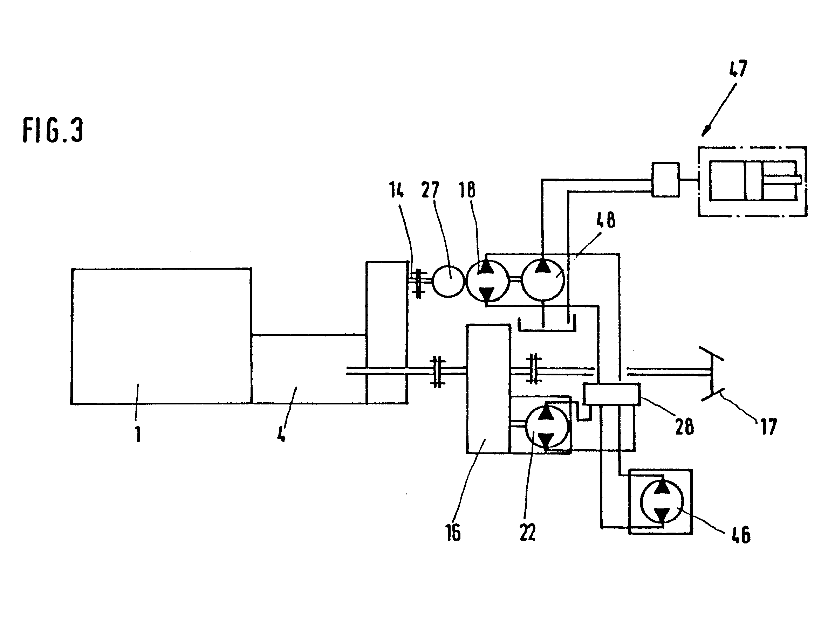

Das in Fig. 3 dargestellte Ausführungsbeispiel eignet sich für ein Müllsammelfahrzeug mit einem Drehtrommelaufbau. Mit Fig. 1 und 2 übereinstimmende Bauteile sind hier mit denselben Bezugsziffern versehen. Zum Antrieb der Drehtrommel ist ein weiterer Hydromotor 46 vorgesehen, der in der entsprechenden Stellung des Umschaltventils 28 im geschlossenen Kreis durch die Verstellpumpe 18 antreibbar ist. Der wechselweise Antrieb des Hydromotors 22 für den Kriechgangantrieb und des Hydromotors 46 für die Drehtrommel (Arbeitshydraulik) erfolgt hierbei, wie bereits zu Fig. 1 und 2 beschrieben. Bei eingeschaltetem Drehtrommelantrieb wird die Verstellpumpe 18 mit konstanter Drehzahl angetrieben. Das Fördervolumen der Verstellpumpe 18 kann in dieser Ausführung durch einen gesonderten Hebel oder durch das Gaspedal verändert werden. Im Falle der Verstellung durch das Gaspedal z.B. über ein durch das Gaspedal betätigbares Potentiometer, muss das Gaspedal von der Antriebsmaschine abgekoppelt werden. In dieser Getriebeanordnung wird eine weitere Arbeitshydraulik 47 benötigt. Daher ist eine zusätzliche, durch die Nebenantriebswelle 14 antreibbare Hydropumpe 48 vorgesehen. Die Hydropumpe 48 arbeitet mit einem konstanten Fördervolumen auf Arbeitszylinder z.B. einer Hubeinrichtung für die Müllbehälter. Die Verstellpumpe 18 und die Hydropumpe 48 sind vorteilhaft als Tandempumpe ausgeführt.

*Bezugszeichen*

1  Antriebsmaschine
2  Hauptkupplung
3  Getriebeeingangswelle
4  Schaltgetriebe
5  Gangschaltkupplung

6 Getriebeausgangswelle
7 Losrad
8 Festrad
9
10 Vorgelegewelle
11 Kupplung
12 Zahnrad
13 Zahnrad
14 Nebenabtriebswelle
15 Ausgangswelle
16 Zwischengetriebe
17 Achsantrieb
18 Verstellpumpe
19
20 Leitung
20A Leitung
21 Leitung
21A Leitung
22 Hydromotor
23 Zwischengetriebe-Eingangswelle
24 Zahnrad
25 Losrad
26 Kupplung
27 Füllpumpe
28 Umschaltventil
29
30 Arbeitshydraulik
31 Steuergerät
32 elektr. Leitungen (Eingang)
33 elektr. Leitungen (Ausgang)
34 Vorsteuerventil
35 Schaltventil
36 Schaltventil
37 Leitung
38 Rückschlagventil
39
40 Rückschlagventil
41 Überdruckventil
42 Leitung
43 Vorsteuerventil
44 Sicherheitsventil
45 Sicherheitsventil
46 Hydromotor
47 Arbeitshydraulik
48 Hydropumpe

**Patentansprüche**

1. Hydrostatisch-mechanische Getriebeanordnung, insbesondere für Müllsammelfahrzeuge mit folgenden Merkmalen:

— eine Antriebsmaschine (1) ist mit einem Schaltgetriebe (4) gekoppelt;
— ein motorabhängiger Nebenantrieb treibt eine Verstellpumpe (18) an, welche hydraulisch mit einem Hydromotor (22) für einen Kriechgangantrieb verbunden ist;
— die Verstellpumpe (18) arbeitet auf den Hydromotor (22) im geschlossenen Kreis;
— es ist eine Arbeitshydraulik (30) für den Antrieb der Arbeitsgeräte vorhanden,

dadurch gekennzeichnet, dass die Verstellpumpe (18) über ein vor dem Hydromotor (22) für den Kriechgangantrieb angeordnetes Umschaltventil (28 mit der Arbeitshydraulik (30) verbindbar ist.

2. Hydrostatisch-mechanische Getriebeanordnung nach Anspruch 1, dadurch gekennzeichnet, dass der Hydromotor (22) des Kriechgangantriebs über ein Zwischengetriebe (16) mit der Getriebeausgangswelle (6) verbunden ist, und der Hydromotor (22) nur in der Neutralstellung des Schaltgetriebes (6) zuschaltbar ist.

3. Hydrostatisch-mechanische Getriebeanordnung nach Anspruch 1, dadurch gekennzeichnet, dass bei betätigtem Schalthebel für die Arbeitshydraulik («Müllbetrieb»), das Umschaltventil (28) die Verstellpumpe (18) auf die Arbeitshydraulik (30) schaltet.

4. Hydrostatisch-mechanische Getriebeanordnung nach Anspruch 1, dadurch gekennzeichnet, dass bei der Umschaltung auf die Arbeitshydraulik (30) die Verstellpumpe (18) auf eine bestimmte Fördermenge eingestellt wird.

5. Hydrostatisch-mechanische Getriebeanordnung nach Anspruch 1, dadurch gekennzeichnet, dass die Antriebsmaschine (1) beim Umschalten auf die Arbeitshydraulik (30) auf eine feste Drehzahl eingestellt wird.

6. Hydrostatisch-mechanische Getriebeanordnung nach Anspruch 1, dadurch gekennzeichnet, dass bei eingeschaltetem hydrostatischen Kriechgangantrieb, die Verstellpumpe (18) beim Bremsen auf Bremsbetrieb verstellt wird.

7. Hydrostatisch-mechanische Getriebeanordnung nach Anspruch 1, dadurch gekennzeichnet, dass das Umschaltventil (28) vom geschlossenen Kreis des Kriechgangantriebs auf offenen Kreis der Arbeitshydraulik (30) umschaltet (Fig. 1 und 2).

**Claims**

1. A hydrostatic mechanical transmission system, especially for garbage collection vehicles, with the following features:

— an engine (1) coupled by a transmission (4);
— an engine-dependent P.T.O. unit driving a variable displacement pump (18), hydraulically connected to a hydromotor (22) used for creep speed operation;
— the variable displacement pump (18) which is connected to the hydromotor (22) by a closed circuit;
— an accessory hydraulic power system (30) is used for implement operation,

characterised in that the variable displacement pump (18) is connectable with this hydraulic power system via a changeover valve (28) mounted before the hydromotor (22) used for creep speed drive.

2. A hydrostatic mechanical transmission system according to claim 1, characterised in that the hydromotor (22) of the creep speed drive is connected to the transmission output shaft (6) via an intermediate gear (16), and the hydromotor (22) can only be engaged in neutral position of mechanical transmission (6).

3. A hydrostatic mechanical transmission system according to claim 1, characterised in that the changeover valve (28) connects variable displacement pump (18) to hydraulic power system, while the shift lever is actuated for the hydraulic power system («garbage operation»).

4. A hydrostatic mechanical transmission system according to claim 1, characterised in that the variable displacement pump (18) is set to deliver a certain fluid volume when changeover to hydraulic power system (30) is done.

5. A hydrostatic mechanical transmission system according to claim 1, characterised in that the engine (1) is set to a fixed speed when changing over to the hydraulic power system (30).

6. A hydrostatic mechanical transmission system according to claim 1, characterised in that the variable displacement pump (18) is varied during brake operation with hydrostatic creep speed operation engaged.

7. A hydrostatic mechanical transmission system according to claim 1, characterised in that the changeover valve (28) is able to change over from the closed circuit of the creep speed drive to the open circuit used for implement hydraulic system (30) (figs. 1 and 2).

**Revendications**

1. Disposition de transmission hydrostatique-mécanique, destinée particulièrement aux camions collecteurs d'ordures, possédant les caractéristiques suivantes:

— une machine motrice (moteur) (1) accouplée à boîte de vitesse (4);
— une prise de mouvement dépendant du moteur et entraînant une pompe à cylindrée variable (18), qui est reliée hydrauliquement à un hydromoteur (22) pour l'entraînement d'une vitesse extra-lente;
— la pompe à cylindrée variable (18) fonctionne sur l'hydromoteur (22) en circuit fermé;
— il existe un circuit hydraulique de travail (30) pour l'entraînement d'outils de travail,

caractérisée en ce que la pompe à cylindrée variable (18) peut être reliée au circuit hydraulique de travail (30) par l'intermédiaire d'une soupape de commutation (28) disposée avant l'hydromoteur (22) pour l'entraînement de la vitesse extra-lente.

2. Une disposition de transmission hydrostatique-mécanique suivant la revendication 1, caractérisée en ce que l'hydromoteur (22) pour l'entraînement de la vitesse extra-lente est relié par un train d'engrenages intermédiaires (16) à l'arbre de sortie (6) de la boîte de vitesses, cet hydromoteur (22) étant couplable seulement quand la boîte de vitesses (6) se trouve au point mort.

3. Une disposition de transmission hydrostatique-mécanique suivant la revendication 1, caractérisée en ce que lors de la manœuvre du levier de commande du circuit de travail hydraulique («collection des ordures»), la soupape de commutation (28) commute la pompe à cylindrée variable (18) sur ledit circuit hydraulique de travail (30).

4. Une disposition de transmission hydrostatique-mécanique suivant la revendication 1, caractérisée en ce que lors de la commutation sur le circuit hydraulique de travail (30), la pompe à cylindrée variable (18) est réglée à une valeur déterminée du débit.

5. Une disposition de transmission hydrostatique-mécanique suivant la revendication 1, caractérisée en ce que la machine motrice (moteur 1) est réglée à un régime fixe déterminé lors de la commutation sur le circuit hydraulique de travail (30).

6. Une disposition de transmission hydrostatique-mécanique suivant la revendication 1, caractérisée en ce que lorsque l'entraînement hydrostatique de la vitesse extra-lente est en prise, la pompe à cylindre variable (18) est commutée sur freinage, quand on actionne l'organe de freinage.

7. Une disposition de transmission hydrostatique-mécanique suivant la revendication 1, caractérisée en ce que la soupape de commutation (28) commute du circuit fermé pour l'entraînement de la vitesse extra-lente au circuit ouvert du système hydraulique de travail (30) (fig. 1 et 2).

FIG.1

0 140 046

zu 1

33   31   32

FIG. 2

37   35   36

21A

22

21

38

44   45

27   18

41

40

20

20A

28

43

30

0 140 046

FIG.3